# EUROPÄISCHE PATENTSCHRIFT

(11) **EP 2 755 794 B1**
(45) Veröffentlichungstag und Bekanntmachung des Hinweises auf die Patenterteilung: **07.11.2018**
(21) Anmeldenummer: 12812820.4
(22) Anmeldetag: 14.09.2012
(51) Int. Cl.: B23K 26/00, B23P 25/00, C21D 5/00, C21D 9/30, F16C 3/06

(54) **VERFAHREN ZUM VERBESSERN DER GÜTE DER OBERFLÄCHEN VON KURBELWELLEN**
METHOD FOR IMPROVING THE QUALITY OF THE SURFACES OF CRANKSHAFTS
PROCÉDÉ PERMETTANT D'AMÉLIORER LA QUALITÉ DES SURFACES DE VILEBREQUINS

(30) Priorität: 16.09.2011 DE 102011113801
(43) Veröffentlichungstag der Anmeldung: 23.07.2014
(73) Patentinhaber: Hegenscheidt-MFD GmbH & Co. KG, 41812 Erkelenz (DE)
(72) Erfinder: MALDANER, Jandrey, 52159 Roetgen (DE); HEIMANN, Alfred, 52078 Aachen (DE)
(74) Vertreter: Patentanwälte Findeisen & Neumann
(86) Internationale Anmeldenummer: PCT/DE2012/000915
(87) Internationale Veröffentlichungsnummer: WO 2013/037353

(56) Entgegenhaltungen:
- WO-A1-2005/063442
- WO-A1-2006/119944
- WO-A1-2010/054648
- DE-A1-102010 025 132
- DE-B3-102004 013 257
- FR-A1- 2 570 718
- US-A1- 2009 116 921

## Beschreibung

Die Erfindung betrifft ein Verfahren zum Verbessern der Güte der Oberflächen an Haupt- und Hublagern von Kurbelwellen aus Stahlguss, durch Bearbeiten von Oberflächen der Lagersitze von Haupt- und Hublagern an Kurbelwellen insbesondere nach einem spanabhebenden Bearbeiten der Oberflächen mit unbestimmter Schneide durch Schleifen oder Finishen.

Ein derartiges Verfahren ist z.B. aus der US2009/0116921A1 bekannt.

Kurbelwellen für PKW- Verbrennungsmotoren sind Großserienteile mit Stückzahlen im Millionenbereich. Geschmiedete Kurbelwellen aus Stahl bedienen den Bereich hochbelasteter Kurbelwellen z. B. bei Dieselmotoren. Die deutlich kostengünstiger zu fertigenden Kurbelwellen aus Stahlguss decken den Bereich von normalbelasteten Motoren ab. Der Fortschritt der Motorentwicklung führt zu höheren Gaskräften und damit zu höher belasteten Kurbelwellen, wobei aus Gründen des Energieverbrauchs die Lagerabmessungen kleiner werden (Stichwort "Downsizing"). Die Tragfähigkeit der Lager der Kurbelwellen aus Stahlguss wird damit zunehmend erschöpft.

Bei den Lagern, insbesondere den Pleuellagern, ist die Oberfläche des Gusswerkstoffs für hohe spezifische Lagerlasten nur noch wenig geeignet. Im Betrieb der Lager öffnen sich sogenannte Deckel über den im Gusswerkstoff eingelagerten Grafitkugeln - "Sphäroliten" genannt - und beschädigen die Gleitlagerschalen der Gegenlauffläche. Hochbelastete Lager arbeiten teilweise im Mischreibungsgebiet und das bei modernen Fahrzeugen übliche Ausschalten der Motoren im lastlosen Zustand (Start-Stop-Zyklen) verschleißt die Lager zusätzlich. Die Lagerspalte beim Betrieb der Motoren liegen rechnerisch im Bereich bis unter 1 µm. Dies verdeutlicht die Forderung nach hoher Formgenauigkeit und geringster Rauheit. Hochbelastete Lager sind sehr formgenau und verlangen aufgrund der chemischen Affinität zum Metall der Lagerschalen eine martensitische Oberfläche und eine sehr geringe Oberflächenrauheit. Eine gehärtete Lagerlauffläche bietet Vorteile beim Transport und Behandeln der Kurbelwelle und Vorteile hinsichtlich der Lagertragfähigkeit. Um diese Vorteile zu nutzen, ist nur eine sehr geringe Härtetiefe im 1/10 mm Bereich notwendig.

Die Mikro-Oberflächenstruktur von Lagerlaufflächen aus dem Werkstoff GJS ist charakterisiert durch Sphäroliten. Werden nun bei der Bearbeitung am gebundenen Korn diese Sphäroliten angeschnitten, beispielsweise durch Schleifen, entstehen die sogenannten Blechmantel, auch "Deckel" genannt. Unter Deckeln versteht man die beim Anschnitt von Sphäroliten an der Oberfläche stehenbleibenden dünnen Metallreste. Unter Belastung können sich diese lösen und es kommt zu einem deutlich höheren Verschleißverhalten der Lagerlauffläche. Durch die Entfernung der Deckel können später im eingebauten und belasteten Zustand der Kurbelwelle abgelöste Partikel die Lagerlaufflächen nicht mehr beschädigen.

Der in der Fertigungsstraße der Kurbelwelle für die Lagerbearbeitung meist vorhandene Prozess des Bandfinishens wird in der Regel zweistufig ausgeführt, mit gröberem Korn für die Deckelbeseitigung und mit feinem Korn zur Reduzierung der Oberflächenrauheit. Mit einem Bandfinishen ist es jedoch aufgrund des Wirkprozesses nicht möglich, die Deckel über den oberflächennahen Sphäroliten vollständig zu beseitigen.

Hieraus ergibt sich die Aufgabe der vorliegenden Erfindung, die Güte der Oberflächen der Lagerlaufflächen von Haupt- und Hublagern von gehärteten oder ungehärteten Kurbelwellen aus Stahlguss nach dem Schleifen oder Finishen der Lagerlaufflächen zu steigern und damit die Lebensdauer von Verbrennungsmotoren zu erhöhen.

Diese Aufgabe wird gelöst, indem man die Deckel auf der Oberfläche der Lagerlaufflächen mit einem Laser beseitigt. Beim Bestrahlen der Oberfläche der Lagerlauffläche verdampfen bzw. schmelzen die Deckel, die über Grafiteinschlüssen liegen. Dadurch werden die Deckel abgetragen und die Grafiteinschlüssen freigelegt. Gleichzeitig erzeugt der Laserstrahl auf der ferritisch-perlitischen Matrix des Grundmaterials eine dünne Härteschicht. Die Laserbearbeitung kann in einem einstufigen Prozess erfolgen, wobei ein gleichzeitiges Deckelbeseitigen und Härten ausreicht. Ebenso ist ein zweistufiger Prozess möglich, in dem das Härten nach der Abtragung der Deckel erfolgt.

Die Reduzierung der Rauheit von mit dem Laser beseitigten Deckeln und anschließend in dünner Schicht gehärteten Oberflächen von Lagerlaufflächen erfolgt durch Glattwalzen. Dies ist ein kostengünstiges und - im Vergleich zum Bandfinishen unter Öl - umweltfreundliches Verfahren. Die gelaserte Oberfläche wird unter hohem Druck von einem aus Hartmetall bestehenden walzenförmigen Werkzeug verformt und geglättet.

Glattgewalzte Oberflächen zeichnen sich durch geringe Rautiefen aus und weisen keine herausragenden Spitzen auf. Durch das Glattwalzen werden zum Beispiel auch keine aggressiven Oberflächen erzeugt, daher ist der Verschleiß in der Einfahrphase des Motors geringer. Somit wird diese Einfahrphase des Motors reduziert und der Lagerverschleiß ebenfalls verringert. Die Gleitlagerschalen der Gegenlauffläche haben folglich eine längere Lebensdauer.

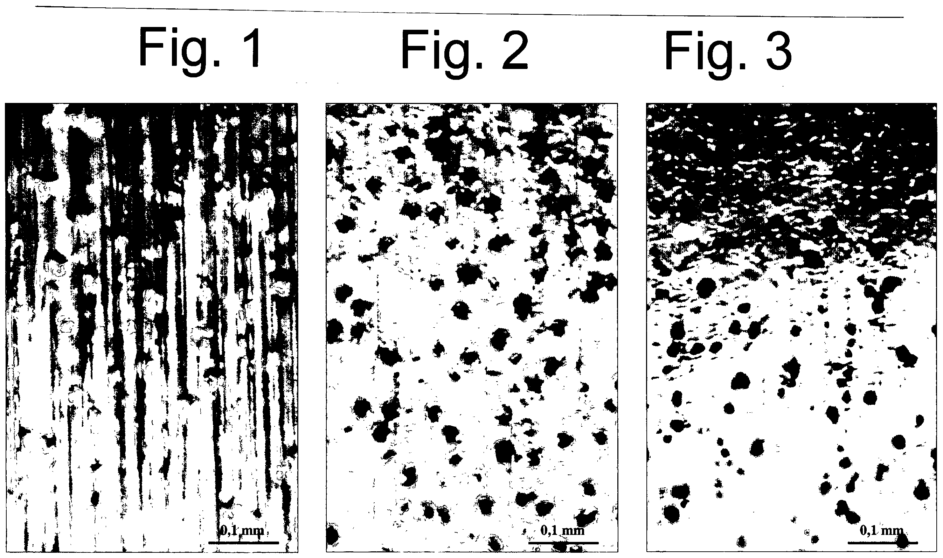

Nachfolgend wird die Erfindung an einem Ausführungsbeispiel näher beschrieben. Es zeigen in jeweils vergrößertem Maßstab die
- Fig. 1 eine geschliffene,
- Fig. 2 eine gelaserte und
- Fig. 3 eine glattgewalzte

Teilfläche einer Oberfläche eines Haupt- oder Hublagers einer Kurbelwelle aus Stahlguss.

Das Schleifen bzw. Bandfinishen von Lagerlaufflächen ist dem einschlägigen Fachmann hinreichend bekannt. Ebenso verhält es sich mit den Einrichtungen zum Lasern und Glattwalzen der Lagerlaufflächen, so dass auf eine detaillierte Beschreibung von derartigen Einrichtungen im Rahmen der vorliegenden Erfindung verzichtet werden kann. Wesentlich ist, dass es sich um handelsübliche Einrichtungen handelt, die entweder bei einer einzigen Maschine vorhanden sind oder allein oder kombiniert auf mehreren Maschinen vorgesehen sind. Welche Maschine oder Kombimaschine bevorzugt wird, richtet sich nach den jeweils zu bearbeitenden Stückzahlen.

Beim Bestrahlen mit dem Laserstrahl wird zugleich eine martensitische Randschicht im Bereich der bestrahlten Lagerlauffläche erzeugt. Durch Verändern der Laserparameter kann auf der bestrahlten Oberfläche eine dünne martensitische Randschicht von vorgegebener Tiefe zwischen 0,01 mm und 0,10 mm erzeugt werden.

Durch Anwendung des erfindungsgemäßen Verfahrens wird die Güte der Oberflächen der Lagerlaufflächen von Haupt- und Hublagern von gehärteten oder ungehärteten Kurbelwellen aus Stahlguss nach dem Schleifen oder Finishen der Lagerlaufflächen gesteigert und damit auch die Lebensdauer von Verbrennungsmotoren erhöht.

## Patentansprüche

1. Verfahren zum Verbessern der Güte der Oberflächen an Haupt- und Hublagern von Kurbelwellen aus Stahlguss, durch Bearbeiten von Oberflächen der Lagersitze von Haupt- und Hublagern an Kurbelwellen insbesondere nach einem spanabhebenden Bearbeiten der Oberflächen mit unbestimmter Schneide durch Schleifen oder Finishen,
**dadurch gekennzeichnet, dass** man die Oberflächen mit einem Laserstrahl derart bestrahlt, dass mit diesem Laserstrahl eine martensitische Randschicht von einer Tiefe zwischen 0,01 mm und 0,10 mm erzeugt wird und wobei man die derart gelaserten Oberflächen mit einem Glattwalzwerkzeug glattwalzt.

## Claims

1. Method for improving the quality of the surface on main and pin bearings of crankshafts made of cast steel by machining surfaces of the bearing seats of main and pin bearings on crankshafts, in particular after machining of the surfaces with an indeterminate cutting edge by grinding or finishing, **characterized in that** the surfaces are irradiated with a laser beam in such a way that a martensitic boundary layer with a depth of between 0.01 mm and 0.10 mm is produced with this laser beam and wherein the surfaces lasered in this way are smoothed with a finishing tool.

## Revendications

1. Procédé en vue de l'amélioration de la qualité de surface de paliers principaux et de paliers de levage de vilebrequins en acier moulé par usinage des surfaces des sièges des paliers principaux et des paliers de levage de vilebrequins, en particulier après un usinage par enlèvement de copeaux des surfaces avec procédé de coupe non défini, par rectification ou finition, **caractérisé en ce que** les surfaces sont irradiées au rayon laser de telle sorte que ce rayon laser génère une couche latérale martensitique d'une profondeur comprise entre 0,01 mm et 0,10 mm et **en ce que** les surfaces ainsi usinées au laser sont laminées avec un outil de laminage de finition.
